# EUROPEAN PATENT APPLICATION

(11) **EP 1 696 642 A1**
(43) Date of publication of application: **30.08.2006**
(21) Application number: 05257212.0
(22) Date of filing: 23.11.2005
(51) Int. Cl.: H04M 1/57, H04M 19/04, H04Q 7/32

(54) **Incoming telephone call indicators**

(30) Priority: 28.02.2005 US 68200
(71) Applicant: Agere Systems, Inc., Allentown, PA 18109 (US)
(72) Inventor: Azimi, Kouros, Center Valley, PA 18034 (US); Fratti, Roger A., Mohnton, PA 19540 (US)
(74) Representative: Williams, David John

(57) **Abstract**

Communication techniques are provided. For example, in one aspect, a communication method comprises the step of inputting information, at the time of placing of a telephone call (108), that directs a receiving telephone to produce one or more of a plurality of incoming call indicators (114,116). The incoming call indicator, which may comprise a particular ring tone, can be used to signify one or more of an identity of a caller, a nature of the call and an importance of the call.

## Description

### Field of the Invention

The present invention relates generally to telecommunication techniques, and more particularly to techniques for placing a call.

### Background of the Invention

With mobile telephone usage increasing, the number of calls an individual mobile telephone user receives, on any given day, is steadily increasing. Answering each incoming call can be time consuming.

Caller identification features on some mobile telephones, to some extent, address this problem by presenting caller identity information, such as, name and/or telephone number. However, use of the caller identification feature requires the user to check the display on his or her telephone for each incoming call, which can be a hassle, and in certain circumstances, a hazard, e.g., when the user is operating a motor vehicle.

Further, a user might want to know the importance of an incoming call, such as, whether or not it is related to an emergency. Even with caller identification, the user would have to engage each calling party to assess the importance of the call.

Therefore, techniques for providing more information regarding incoming telephone calls would be desirable.

### Summary of the Invention

Communication techniques are provided. For example, in one aspect of the invention, a communication method comprises the step of inputting information, at the time of placing of a telephone call, that directs a receiving telephone to produce one or more of a plurality of incoming call indicators. The incoming call indicator, which may comprise, for example, a particular ring tone, can be used to signify one or more of an identity of a caller, a nature of the call and an importance of the call.

A more complete understanding of the present invention, as well as further features and advantages of the present invention, will be obtained by reference to the following detailed description and drawings.

### Brief Description of the Drawings

FIG. 1 is a diagram illustrating an exemplary methodology for processing a telephone call;
FIG. 2 is a diagram illustrating an exemplary system within a telephone for sending and/or receiving and decoding call indicator information; and
FIGS. 3A-B are diagrams illustrating exemplary business implementations of a method for placing a telephone call.

### Detailed Description

The following description will be presented in the context of placing and receiving mobile telephone calls, e.g., calls placed from and received by mobile telephones. However, it is to be understood that the present teachings should not be construed as being limited to implementations involving mobile telephones. For example, the present techniques are equally applicable to calls placed from and/or received by a land-based telephone.

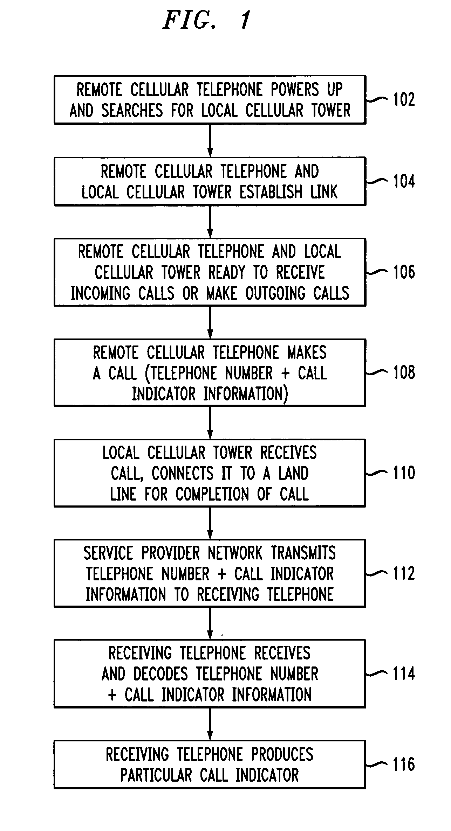

FIG. 1 is a diagram illustrating an exemplary methodology for processing a telephone call. In step 102, a remote cellular telephone is powered up, and searches for a local cellular tower. In step 104, once a local cellular tower is discovered by the remote cellular telephone, a link is established. At this point, as in step 106, the remote cellular telephone and local cellular tower are now in contact and the remote cellular telephone is ready to receive incoming calls, or to make outgoing calls.

In step 108, the remote cellular telephone is used to place a call. Specifically, a user of the remote cellular telephone will enter in a series of numbers, for example, on a key pad of the cellular telephone, representing the number of a telephone to which he or she wishes to make a call. According to the teachings presented herein, the user may also enter information, e.g., a call indicator code, at the time of the placing of the call, that will prompt the receiving telephone to produce a particular indicator to signal the incoming call. As will be described in detail below, the particular call indicator might signify an identity of the caller, a nature of the call and/or an importance of the call to the receiving party. The call indicator code may be transmitted, e.g., as alpha-numeric sequences or as tones, in accordance with User-to-User signaling guidelines, described in detail below.

By way of example only, a woman wanting to call her husband because an emergency has arisen would be able to dial into her mobile telephone her husband's telephone number, followed by one or more digits that will prompt her husband's telephone, when it receives the call, to produce an incoming call indicator that signifies an urgent call is being received. In this embodiment it is assumed that the telephone placing the call and the telephone receiving the call are able to 'communicate' with each other, such that the receiving telephone acknowledges the call indicator code sent. Instances wherein the receiving telephone does not recognize a call indicator code are described in detail below.

Call indicator codes may be pre-established by the parties. Using the example above, the husband and wife might have agreed on a certain call indicator code to signify urgent calls. Each party could then program this call indicator code into his or her telephone. As such, when this call indicator code is received, it is recognized. This call indicator code would however, be unique to the parties involved and to whomever the parties disclosed the call indicator code.

Alternatively, call indicator codes may be pre-established, for example, by the manufacturer(s) of the telephones or by an enterprise for all of its employees. By way of example only, a cellular telephone manufacturer might preprogram all of its telephones to recognize a certain call indicator code as signifying an urgent incoming call. Further, some consensus may be established among manufacturers regarding call indicator codes, such that 'universal' codes are established. That way, callers, in general, would be aware of what 'universal' codes are available and recognized by a variety of receiving telephones. Similarly, 'universal' codes might be established by a service provider.

Other circumstances may also be envisioned. For example, a telephone may come preprogrammed to recognize a certain number of 'universal' call indicator codes. Emergency codes, for example, would be an ideal call indicator code to come preprogrammed into a telephone (e.g., how the numbers 911 have taken on a universal emergency status). Users might also have the option to establish additional call indicator codes, and program them into their own telephones.

In an alternative embodiment, a caller, at the time of placing a call may be presented with a menu, e.g., by the service provider. The menu might give the caller a number of call indicator codes to choose from, which the caller can select by keying them into his or her telephone. By way of example only, when a caller places a call, e.g., by keying in the number of the receiving telephone, before the call is sent by the service provider through the network, a menu is presented to the caller containing options for placing indicators as to the nature of the call. For example, the menu might recite, "if this call is urgent, press one, if this call is personal press 2, if this call is related to business press 3." Further, the menu might be presented to the caller automatically, e.g., upon the caller placing a call, or, alternatively, the menu might only be presented to the caller if the caller performs certain affirmative steps, for example, entering a password. In the instance where a password is required, the password might be provided to the caller, at a time prior to the placing of the call, by the user of the receiving telephone. The requiring of a password can be beneficial in preventing unknown callers from, e.g., placing an urgent code on their call, even when said call is not urgent, simply to get the attention of the receiving party.

If the caller chooses to enter a code from the menu, the code will then be transmitted by the service provider along with the telephone number dialed. If the caller, for example, chooses not to enter a call indicator code, a default condition may be established.

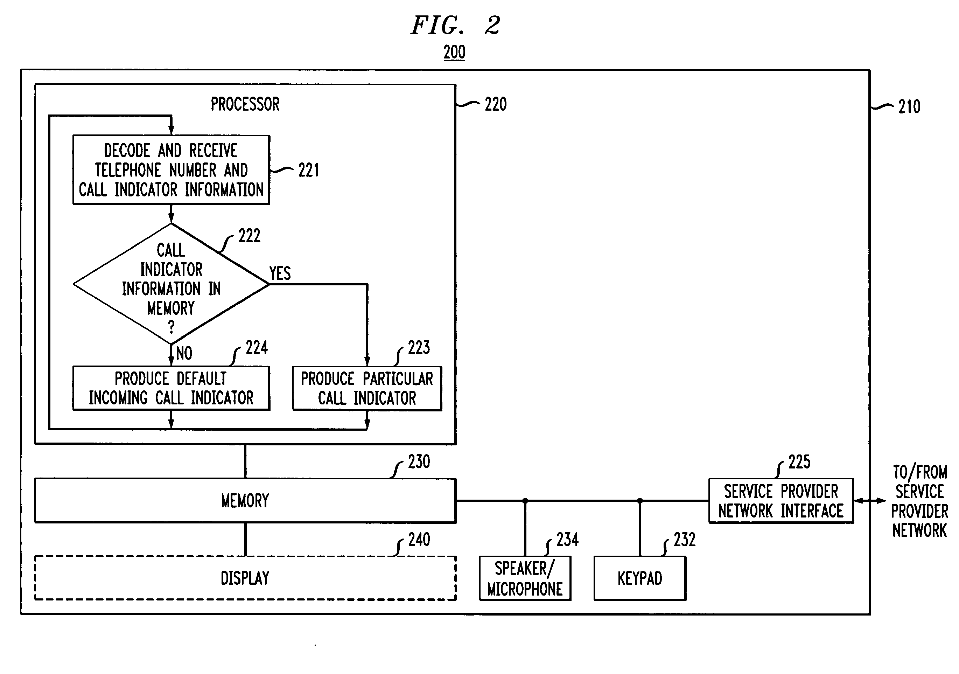

In the above exemplary embodiments, the telephones are able to 'communicate' with each other regarding the call indicator code information. Specifically, each telephone is configured to send and/or to receive and decode the call indicator code information. An exemplary system within a telephone for sending and/or receiving and decoding call indicator information is described, for example, in conjunction with the description of FIG. 2, below.

Communication between, e.g., mobile telephones, is described generally in Technical Specification 3GPP TS 24.087, V5.0.0 (2002-06), entitled "3^{rd} Generation Partnership Project; Technical Specification Group Core Network; User-to-User Signalling [sic.] (UUS) Supplementary Service - Stage 3 (Release 5), released by GSM, Global System for Mobile Communications, of London, England and 3GPP, of Valbonne, France (hereinafter "the Specification"), the disclosure of which is incorporated by reference herein.

The Specification outlines the interaction between a served subscriber, who activates the UUS supplementary service, and a remote party, which may comprise the called party. Specifically, the Specification sets forth that both parties to a call, e.g., the served subscriber and the remote party, may exchange User-to-User information (UUI) during the set up of a call by including User-to-User information element(s) in basic call control messages, e.g., as part of a normal call request.

In step 110, the local cellular tower receives the call and connects it to a land line for completion. In step 112, the service provider network transmits the telephone number and the call indicator code information to the receiving telephone. In step 114, the receiving telephone receives and decodes the telephone number and call indicator information. See the description of FIG. 2, below.

In step 116, the receiving telephone produces a particular call indicator to signal the incoming call. The call indicator may comprise one of a number of distinctive ring tones. For example, the call indicator for an urgent call, e.g., an emergency, might be a siren-like sound or a sharp beep. Also, the call indicator for an urgent call might be a voice indicator stating that "the incoming call is urgent."

Alternatively, or in addition, to the distinctive ring tones, the call indicator may comprise a distinctive vibrate pattern to signal an incoming call. For example, the call indicator for an urgent call might be short pulses of vibration, e.g., signaling urgency. While ring tones and vibrate patterns are described herein as call indicators, they are merely exemplary and any other distinctive call indicators suitable for signaling, e.g., the nature of, an incoming call may be used. By way of example only, a portion of the telephone might emit visible and distinct flashes of light to signal a call. For example, the antenna base may be configured to emit visible and distinct flashes of light to signal a call.

In the above description of call indicators, the indicators were described as signaling to the receiving party the nature of the incoming call, e.g., that it is urgent. According to the teachings presented herein, exemplary categories regarding the nature of an incoming call include, but are not limited to, that the incoming call is urgent, that the incoming call is related to business, that the incoming call is personal, that the incoming call is a long distance call, that the incoming call is a local call, that the incoming call is from a mobile telephone, that the incoming call is from a land-based telephone and combinations comprising at least one of the foregoing categories. The indicators may, however, signal to the receiving party the identity of the caller. By way of example only, the caller might enter a code at the time of placing a call that signals the receiving telephone to issue a voice indicator stating that "the incoming call is from your mother" or "the incoming call is from your boss."

In instances where the caller does not enter a code specifying a particular call indicator, or where a call is received that contains a call indicator code that is not recognized by the receiving telephone, the receiving telephone may produce a default call indicator, such as a typical telephone ring tone. Alternatively, in the instance wherein the call indicator code is not recognized, the receiving telephone might indicate to a user of that telephone that the incoming call contains information that is not recognized, e.g., by producing a distinctive ring tone associated with that instance.

Based on the above call indicators, the user of the receiving telephone can choose whether or not to answer a particular call. For example, a caller might choose to answer only urgent calls and allow the remaining calls to be transferred to a voice mailbox.

FIG. 2 is a diagram illustrating an exemplary system within a telephone for sending and/or receiving and decoding call indicator information. Apparatus 200 comprises a system 210, e.g., within a telephone, that interacts with a service provider network. System 210 comprises a processor 220, a service provider network interface 225, a memory 230, a keypad 232, a speaker/microphone 234 and an optional display 240. Service provider network interface 225 allows system 210 to connect to a service provider network.

Processor 220 is configured to decode telephone numbers and call indicator code information received from the service provider network, e.g., via service provider network interface 225 (step 221). Processor 220 then determines if the call indicator information decoded matches information stored in memory 230 (step 222). If the call indicator code information decoded by processor 220 matches a call indicator code stored in memory 230, then processor 220 is configured to cause a particular call indicator associated with that call indicator code information to be produced (step 223). As highlighted above, exemplary call indicators include, but are not limited to, particular ring tones and/or vibrate patterns. In either instance, system 210 would comprise a component (not shown) for either producing the ring tone and/or the vibrate pattern. These components are conventional, and would be readily apparent to one of ordinary skill in the art.

If, however, the call indicator information decoded by processor 220 does not match any call indicator codes stored in memory 230, or alternatively, if no call indicator information is received, then processor 220 is configured to cause a default call indicator to be produced (step 224). The default call indicator may be, for example, a typical telephone ring tone or a ring tone set by a user of the telephone. See above.

In an exemplary embodiment, service provider network interface 225 is configured to interface with a wireless service provider network. For example, the telephone may be a mobile telephone. Alternatively, service provider network interface 225 may be configured to interface with a wired service provider network, for example, when the telephone is a land-based telephone.

As highlighted above, memory 230 is configured to store call indicator codes. As also described above, these call indicator codes may be preprogrammed into memory 230 by the manufacturer of the telephone and/or by the network service provider. A caller may then select a 'universal' call indicator code, e.g., from a menu. Alternatively, or in addition to, call indicator information may be programmed into memory 230 by a user of the telephone. 'Personalized' call indicator codes can then be created, e.g., based on some prior interaction between parties.

Keypad 232 allows a user of the telephone, e.g., to place outgoing calls. For example, the user might key in the number that he or she wishes to call, followed by call indicator code information. Speaker/microphone 234 allows a user of the telephone to communicate with another party.

As is known in the art, the methods and apparatus discussed herein may be distributed as an article of manufacture that itself comprises a computer-readable medium having computer-readable code means embodied thereon. The computer-readable program code means is operable, in conjunction with a system such as system 210, to carry out all or some of the steps to perform one or more of the methods or create the apparatus discussed herein. For example, the computer-readable code is configured to implement a communication method by the step of producing one or more of a plurality of incoming call indicators in response to information input at the time a telephone call was placed.

The computer-readable medium may be a recordable medium (e.g., floppy disks, hard drive, optical disks such as a DVD, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic medium or height variations on the surface of a compact disk.

Memory 230 configures the processor 220 to implement the methods, steps, and functions disclosed herein. The memory 230 could be distributed or local and the processor 220 could be distributed or singular. The memory 230 could be implemented as an electrical, magnetic or optical memory, or any combination of these or other types of storage devices. Moreover, the term "memory" should be construed broadly enough to encompass any information able to be read from or written to an address in the addressable space accessed by processor 220. With this definition, information on a network, accessible through service provider network interface 225, is still within memory 230 because the processor 220 can retrieve the information from the service provider network. It should be noted that each distributed processor that makes up processor 220 generally contains its own addressable memory space. It should also be noted that some or all of system 210 can be incorporated into an application-specific or general-use integrated circuit.

Optional display 240 is any type of display suitable for interacting with a human user of apparatus 200. Generally, display 240 is a screen or other visual display on the telephone.

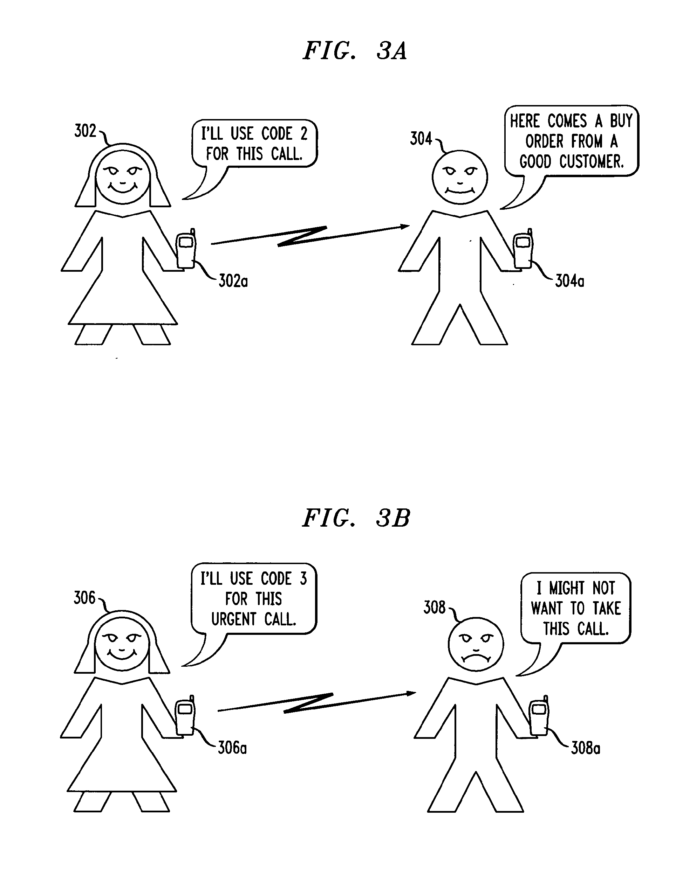

FIGS. 3A-B are diagrams illustrating exemplary business implementations of a method for placing a telephone call. In FIG. 3A, buyer 302 places a telephone call to seller 304 using mobile telephone 302a. Buyer 302 wants to make a purchase from seller 304 and therefore enters a call indicator code into her telephone 302a, at the time of dialing telephone 304a of seller 304. The call indicator code buyer 302 enters will prompt telephone 304a of seller 304 to produce a ring tone indicative of a potential purchase. Further, seller 304 may provide this code only to his preferred customers. Therefore, in this instance, seller 304 would know that he is receiving a call from preferred customer regarding a potential sale, before he answers his phone.

In FIG. 3B, consumer 306 places a telephone call to her stock broker 308 using her mobile telephone 306a. Consumer 306 wants to call to instruct stock broker 308 to sell some of her stock and therefore enters a call indicator code into her telephone 306a when dialing telephone 308a of stock broker 308. The call indicator code consumer 306 enters will prompt telephone 308a of stock broker 308 to produce a ring tone indicative of a stock sale.

Although illustrative embodiments of the present invention have been described herein, it is to be understood that the invention is not limited to those precise embodiments, and that various other changes and modifications may be made by one skilled in the art without departing from the scope or spirit of the invention.

## Claims

1. A communication method, the method comprising the step of:
inputting information, at the time of placing of a telephone call, that directs a receiving telephone to produce one or more of a plurality of incoming call indicators.

2. The method of claim 1, wherein the incoming call indicator signifies one or more of an identity of a caller, a nature of the call and an importance of the call.

3. The method of claim 1, wherein the incoming call indicator comprises one or more of a particular ring tone; a particular vibrate pattern, and a call indicator code.

4. The method of claim 3, wherein a user of the receiving telephone assigns one or more incoming call indicators to the call indicator code.

5. The method of claim 1, wherein the inputted information comprises one or more of a call indicator code pre-established by a caller and a user of the receiving telephone.

6. The method of claim 1, further comprising the step of querying a caller, at the time of the placing of the telephone call, as to whether the caller wants to input the information directing the receiving telephone to produce the incoming call indicator.

7. The method of claim 1, wherein the receiving telephone is configured to decode the inputted information.

8. The method of claim 1, wherein the inputted information is transmitted as one or more of an alpha-numeric code to the receiving telephone, the receiving telephone being configured to decode the alpha-numeric code, and is transmitted as tones to the receiving telephone, the receiving telephone being configured to decode the tones.

9. A communication apparatus comprising:
a memory; and
at least one processor, coupled to the memory, operative to:
produce one or more of a plurality of incoming call indicators in response to information input at the time a telephone call was placed.

10. The apparatus of claim 9, wherein the incoming call indicator comprises one or more of a particular ring tone and a particular vibrate pattern.
